# EUROPEAN PATENT SPECIFICATION

(11) **EP 3 644 408 B1**
(45) Date of publication and mention of the grant of the patent: **19.07.2023**
(21) Application number: 18202761.5
(22) Date of filing: 26.10.2018
(51) Int. Cl.: H01M 50/507, H01M 50/503, H01M 50/271, H01M 50/209, H01M 50/30

(54) **BATTERY MODULE**
BATTERIEMODUL
MODULE DE BATTERIE

(43) Date of publication of application: 29.04.2020
(73) Proprietor: Samsung SDI Co., Ltd., Gyeonggi-do 17084 (KR)
(72) Inventor: Weinberger, Martin, 9063 Maria Saal (AT); Kraker, Martin, 8052 Graz (AT); Blaznik, Matic, 2000 Maribor (SI); Killmann, Jörg, 8052 Graz (AT)
(74) Representative: Gulde & Partner

(56) References cited:
- JP-A- 2010 205 509
- JP-A- 2012 164 477
- US-A1- 2014 008 781
- US-A1- 2017 179 458

## Description

### Field of the Invention

The present invention relates to a battery module, particularly to a battery module with improved fire-retardancy and with improved mechanical properties.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while highcapacity rechargeable batteries are used as the power supply for electric or hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electric consumers for forming a battery system.

To provide electrical integration of a battery system in modular designs either submodules with a plurality of cells connected in parallel are connected in series (*XsYp*) or submodules with a plurality of cells connected in series are connected in parallel (*XpYs*)*. XsYp* type submodules can generate high voltages and *XpYs* type submodules the capacitance of the cells add up and thus *XpYs* type submodules are mostly used for low capacitance cells.

A battery module usually comprises a casing for enclosing all its constituting components. To provide thermal control of the enclosed components a thermal management system may be used to efficiently emit, discharge and/or dissipate heat generated within the casing. If such thermal management system is omitted or the heat drain from the casing is not sufficiently performed, an increase of the internal temperature can lead to abnormal reactions occurring therein. An example of such abnormal operation condition is a thermal runaway of a battery cell that may be entered by strongly overheated or overcharged Lithium ion cell. The thermal runaway is a self-accelerating chemical reaction inside the cell, which produces high amounts of heat and gas, until all available material is exhausted. Due to high amounts of hydrogen and carbon monoxide within the produced gas it may be toxic and flammable.

Usually a battery cell comprises a venting opening for allowing the gas produced in an abnormal operation condition to be released from the cell if a certain overpressure and/or a certain temperature inside the cell is exceeded. However, usual battery modules enclose the components therein in an essentially gas tight manner, which might lead to damage to in the case of a highly increased inside pressure. Further, dangerous fumes and gases that may occur during thermal runaway (venting) or other dysfunctions of battery cells can accumulate within the casing and/or may be released in uncontrolled manner. The combination of these effects poses a serious threat for users of the battery system that might be exposed to the toxic gases and/or may be harmed by the explosion of a module case due to overpressure.

The battery module case is usually provided in a sealed and gas-tight manner in order to protect the constituents from environmental impacts, such as e.g. mechanical impacts, dust and humidity. Particularly, the top side of a battery module, comprising the interconnected cell terminals, the busbar structure and/or control electronics mounted on top of the battery cells, such as e.g., a Cell Supervision Circuit, CSC, or a Battery System Manager, BSM, is particularly prone to damage due to mechanical impacts. Hence, a mechanical protection particularly of the top section of a battery module is of uttermost importance.

However, the venting openings of prismatic battery cells are usually disposed on top of the prismatic battery cells, e.g., in between the cell terminals of a battery cell. Hence, a discharge of the venting gases emitted by the plurality of battery cells must also occur in an upper region of the battery module. Thus, the mechanical requirements are in conflict with the requirements regarding a save gas-discharge from the battery module.

Examples may be found in JP 2012 164477 A, US 2017/179458 A1, JP 2010 205509 A and US 2014/008781 A1.

It is thus an object of the present invention to overcome or reduce at least some of the drawbacks of the prior art and to provide a battery module with improved mechanical properties, particularly with respect to an upper region of the battery module, and with improved properties regarding the gas discharge from a top section of the battery module.

### Summary of Invention

One or more of the drawbacks of the prior art could be avoided or at least reduced by means of the present invention. In particular, a battery module is provided, that comprises a plurality of aligned battery cells, which are aligned in an alignment direction that is the extension or lengthwise direction of the battery module. Each of the battery cells of the battery module comprises an electrode assembly that is accommodated in a battery case, preferably a prismatic battery case with at least one rectangular cross section. The battery cells further each comprise a cap assembly that is placed on the battery case, wherein a gas exhaust vent is disposed in the cap assembly. The gas exhaust vent is configured to emit gas if a predetermined pressure threshold in the battery case is exceeded, e.g., during an abnormal operation condition of the battery cell. Further, cell terminals protrude over the cap assembly, preferably through the cap assembly. In an alternate embodiment, one cell terminal may protrude over the cap assembly, while the battery case provides the other terminal. Preferably, each battery cell comprises a first cell terminal and a second cell terminal, and the gas exhaust cent is disposed in between the first and the second cell terminal.

The battery module of the invention further comprises a plurality of busbars that are disposed on top of the cap assemblies, i.e., over the cap assemblies. That is, the busbars are disposed in a height direction of the battery module above the battery cells, i.e., the cap assemblies thereof. Therein, one or more layers may be disposed between the busbars and the battery cells, e.g., to electrically isolate the cases and the busbars, or the busbars may be disposed directly on the battery cell cases. Each of the busbars is configured for electrically connecting the terminals of at least two battery cells via their cell terminals, depending on the amount of battery cells connected in parallel in the battery module. That is, in a battery module with an XpYs configuration, each busbar is configured for electrically connecting the cell terminals of 2*X battery cells, i.e., for connecting parallely connected battery cells. Together, the plurality of busbars are configured for conducting the current of the battery module, i.e., to transport the summed current of all battery cells connected in parallel in the battery module. That is, the busbars have to be configured differently than wires or conductors serving merely to conduct probe voltages or currents for measurements.

According to the present invention, a plurality of inlays is formed in the layer of the busbars. That is the inlays do not exceed the height of the busbars, i.e., they may not protrude over the busbars in the height direction of the battery module or under the busbars in the direction opposite the height direction of the battery module. In other words, the plurality of inlays has at most the height of the at least one busbar. Further, the inlays do not merely encapsulate the busbars but are rather positively molded to at least one busbar. In other words, each inlay of the plurality of inlays is form fitted to the exterior shape of at least one busbar. Particularly preferred, the plurality of inlays is molded, e.g., injection molded from a thermoplastic or thermosetting material, to the exterior shape of the busbar within stratum of the at least one busbar, i.e., to lateral side walls of the busbar. Preferably, at least one inlay is positively molded to two busbars, filling a gap between the busbars in the stratum of the busbars. Further preferred, at least one inlay is positively molded to only one busbar, i.e. filling a gap between the busbar and an outer boundary of the battery module.

The battery module of the present invention further comprises a top cover that is disposed on top of the busbars and that is configured for covering the cap assemblies of each of the battery cells, for covering the plurality of busbars, and for covering the plurality of inlays. In other words, the top cover extends over the whole battery module in the lengthwise direction thereof and in a direction opposite to the lengthwise direction thereof. Further preferred, the top cover is configured to seal a top section of the battery module, i.e., to fully confine a volume above the battery module together with the cap assemblies of the battery module. Therein, the confined volume may have one gas exhaust path as described in more detail below. According to the present invention, the plurality of busbars and the plurality of inlays form a support surface that is facing towards the top cover and that is configured for mechanically supporting the top cover. Hence, if a mechanical load is applied to the battery module from top, the combination of busbars and inlays provides sufficient support for the top cover and damages of the top cover can be avoided. Particularly, it can be avoided that the top cover is pushed into voids spaces between the busbars in the layer of the busbars, which might lead to damages of the top cover. In other words, by providing the plurality of inlays any edges or corners of the battery module can be smoothed and the mechanically stability of the battery module against mechanical loads applied from the top is increased.

In a preferred embodiment, the plurality of busbars and at least one of the plurality of inlays form a straight and/or level support surface. By providing a straight surface, the top cover contacting the combination of busbars and inlays contacts the whole surface at the same time and not only protrusions thereof, thus distributing any mechanical load to the whole surface area. Further, by providing a level surface a level battery module with a level top cover can be provided. A straight and/or level surface is preferably provided by at least one inlay being positively molded to at least one busbar in the layer of the busbar and having a height that corresponds to the height of the at least one busbar, i.e., is equal to the height of the at least one busbar.

The battery module of the invention comprises a plurality of inlays, wherein each of the plurality of inlays is positively molded to at least one busbar as described above. Preferably some of the plurality of inlays are positively molded to two busbars and others of the at least one inlay are positively molded to only one busbar. The plurality of inlays and the plurality of busbars form a continuous support surface that is extending along the plurality of battery cells in the alignment direction of the plurality of battery cells. In other words, the plurality of inlays and the plurality of busbars form a continuous support surface extending along the lengthwise direction of the battery module from one end of the battery module to the opposite end of the battery module. In other words, no trenches or elevations are present between along the support surface in the lengthwise direction of the battery module. Further preferred, such continuous support surface also extends along the plurality of battery cells in a direction perpendicular to the alignment direction thereof. That is, the plurality of inlays and the plurality of busbars of the battery module form a continuous support surface that is essentially extending over the whole top section of the battery module, i.e. is fully covering the battery cells of the battery module. According to this embodiment, the combination of busbars and inlays advantageously fills the whole volume disposed between the battery cells and the top cover of the battery module. Hence, a particular mechanically stable battery module is provided.

According to an alternative embodiment, the gas exhaust vent of each battery cell is indeed disposed in between a first cell terminal and a second cell terminal of that battery cell. Particularly preferred, the first cell terminal of each battery cell is disposed near a first terminal end of the cap assembly of that cell and the second cell terminal is disposed near a second terminal end of the cap assembly that is opposite to the first terminal end. Particularly preferred, the first cell terminals of the plurality of battery cells are aligned in the lengthwise direction of the battery module and the second first terminals of the plurality of battery cells are aligned in the lengthwise direction of the battery module. According to this embodiment, a first subset of busbars electrically interconnects the first cell terminals and a second subset of busbars electrically interconnects the second cell terminals. In other words, the first subset of busbars extends along the first terminal ends of the cap assemblies and the second subset of busbars extends along the second terminal ends of the cap assemblies, wherein the gas exhaust vents of the batter module are disposed between the plurality of first busbars and the plurality of second busbars. Preferably, also the gas exhaust vents are aligned in the lengthwise direction of the battery module. According to this embodiment, a first subset of inlays is positively molded to the busbars of the first set of busbars and a second subset of inlays is positively molded to the busbars of the second set of busbars. Therein, the first set of inlays and the second set of inlays is distinct of each other, i.e., the inlays of these sets are not merely parts of a common inlay but actually form separate physical entities. Further, the first set of inlays forms a first support surface and the second set of inlays forms a second support surface as described above. Preferably, each of the first and second support surfaces extends along the battery module in the alignment direction of the battery module.

According to this preferred embodiment, a gas exhaust channel is advantageously formed in the layer of busbars, wherein the gas exhaust channel is extending along the gas exhaust vents. In other words, as inlays of the first set of inlays are distinct from the inlays of the second set of inlays void space remains between the first and second set of inlays. In other words, neither the first nor the second support surface extends along the battery module in a direction opposite to the alignment direction of the battery module. Rather the gas exhaust channel is formed between the first support surface and the second support surface. Although the gas exhaust channel may limit the support capability of the support surface, it provides a gas exhaust path for venting gases emitted via the gas exhaust vents of the battery cells. Further, the dimensions of the gas exhaust path may be precisely set. Particularly preferred, the gas exhaust channel is confined by the first subset of inlays, i.e., lateral side surfaces facing the gas exhaust channel, the second subset of inlays, i.e., lateral side surfaces facing the gas exhaust channel, the cap assemblies of the battery cells, i.e., portions of the top surfaces thereof surrounding the respective gas exhaust vent, and the top cover of the battery module, i.e. the part thereof stretching over the gas exhaust channel.

The gas exhaust channel preferably extends along the battery module in the alignment direction of the battery module and particularly preferred extends in the alignment direction of the battery module. In other words, the gas exhaust channel provides a gas discharge path that terminates at one or more short lateral sides of the battery module. Hence, the vent gases of the plurality of battery cells can be safely discharged via the gas exhaust channel from the short sides of the battery module. Further preferred, the gas exhaust channel is closed at one short lateral side of the battery module, e.g., by being further confined by a third busbar as described in more detail below. Then, the vent gases are discharged from one short lateral side of the battery module and are thus discharged even more controlled.

According to a further preferred embodiment, the battery module of the invention comprises a first sublayer of busbars that is configured for interconnecting a first subset of battery cells and a second sublayer of busbars that is configured for interconnecting a second of battery cells. Preferably, in an XpYs configuration, the first sublayer of busbars preferably interconnects Xp(0.5*Y)s battery cells and the second sublayer of busbars interconnects Xp(0.5*Y)s battery cells. Further preferred, in a XsYp configuration, the first sublayer of busbars interconnects (0.5*X)sYp battery cells and the second sublayer of busbars interconnects (0.5*X)sYp battery cells. Hence, this embodiment advantageously allows for a denser packaging of the battery module, particularly if using partially overlaid busbars. In order to avoid short circuits between the sublayers, the first sublayer of busbars is preferably separated from the second sublayer of busbars via at least one electrically insulating layer.

Further preferred, the second sublayer of busbars is disposed over the first sublayer of busbars and the busbars of the first sublayer are shifted with respect to the busbars of the second sublayer, preferably in the alignment direction of the battery module. Particularly preferred each busbar of the first sublayer of busbars, is shifted with respect to a corresponding busbar of the second sublayer of busbars in the lengthwise direction of the battery module. In other words, the busbars of the sublayers are partially overlaid with each other. Therein, each busbar of the first sublayer of busbars is electrically isolated from each of the busbars of the second sublayer of busbars, by distance and/or by an insulating layer in between these busbars, particularly in between the partially overlaid busbars. By shifting these busbars, the gas exhaust channel is confined along wider stretches of the battery module by the lateral side surfaces of the busbars as with only a single layer of busbars.

In a particularly preferred embodiment, the first sublayer of busbars is separated from the second sublayer of busbars in a height direction of the battery module. In other words, the battery module preferably comprises a first sublayer of busbars interconnecting a first subset of the plurality of battery cells, wherein this first sublayer of busbars is followed in the height direction of the battery module by at least one insulating layer, i.e. at least one insulating layer disposed above the first sublayer of busbars. The at least one insulating layer is followed in the height direction of the battery module by the second sublayer of busbars interconnecting the second subset of the plurality of battery cells, i.e. the second sublayer of busbars is disposed above the at least one insulating layer. Further insulating layers may be disposed below the first sublayer of busbars, e.g. for isolation of battery call cases, and/or above the second sublayer of busbars, e.g. for isolation of the top cover of the module.

According to another preferred embodiment, at least one of these electrically insulating layers is replaced or comprises a flexible printed circuit, FPC, layer embedded by outer insulating layers. In other words, a FPC with electrically passive main surfaces may be used as insulating layer. Therein, the main surfaces of the FPC may not be completely passive but may allow for electrically connecting the FPC to the busbars and/or the cell terminals of battery cells of the module. Exemplarily, the FPC may be part of a Cell Supervision Circuit, CSC, connected to at least one busbar or cell terminal of the battery module for receiving at least one cell voltage and/or temperature of at least one battery cell of the battery module. The FPC or any other insulating layer may further comprises openings that are aligned with the gas exhaust vents of the battery cells and vent gases to enter the gas exhaust channel. The FPC may therein be disposed between the sublayers of busbars, below the first sublayer of busbars or above the second sublayer of busbars.

According to a further preferred embodiment, the battery cells of the first subset and the battery cells of the second subset are interleaved with each other. Therein, as the busbars of the first sublayer of busbars are shifted from the busbars of the second sublayer of busbars as described above, a busbar of the first sublayer spans over at least one battery cell of the second subset without contacting it and a busbar of the second sublayer spans over at least one battery cell of the first subset without contacting it. Particularly, the central body section (as described below) of a busbar of the first sublayer may be located over the cell terminals of at least one battery cell of the second subset without contact and the central body section of a busbar (as described below) of the second sublayer may be located over the cell terminals of at least one battery cell of the first subset without contact. Herein contact particularly refers to electric contact but may also refer to mechanical contact.

In a further preferred embodiment of the battery module, each busbar of the plurality of busbars comprises a busbar body portion that is extending in the alignment direction of the battery module and further comprises at least two legs that are extending from the busbar body portion in a direction non-parallel to the alignment direction. The bus bar body portion comprises a length in the alignment direction that is configured for connecting cell terminals of at least two battery cells of the battery module. Preferably, the length of the busbar body portion corresponds to at least two times, preferably to at least three times, the extension of a battery cell of the battery module in the lengthwise direction of the battery module. However, the length of the busbar body portion may also correspond to six times (2pXs), nine times (3pXs) or twelve times (4pXs) the extension of a battery cell of the battery module in the lengthwise direction of the battery module. The latter is useful for double-layered busbar setups. The busbar body portion of the busbar is preferably (fully) planar.

The legs, i.e., cell contact legs, are configured for electrically connecting the busbar body portion and the cell terminals of the battery cells electrically connected by the busbar. Preferably, each leg encloses an angle between 0° and 180°, further preferred between 45° and 135° with the alignment direction of the battery module. Particularly preferred, each leg extends from the busbar body portion in a direction (essentially) perpendicular to the lengthwise direction of the battery module. Further preferred, the at least two legs are essentially parallel to each other. In this embodiment, the busbar comprises an amount of legs that is equal to or less the amount of battery cells interconnected by the busbar, wherein each leg connects at least one cell terminal to the busbar body portion. Exemplarily, if the busbar is configured to electrically connect two battery cells, a first cell contact leg may extend perpendicularly from the busbar body portion, e.g., from a first end thereof, to connect a cell terminal of a first cell, and a second cell contact leg may extend perpendicularly from the busbar body portion, e.g., from a second end thereof, to connect a cell terminal of a second cell. However, each of these legs may also be connected to two or more terminals, respectively, or each cell terminal may be connected via a separate leg to the busbar body.

According to this embodiment, the busbar body portion, i.e., the portion of the busbar that is mainly responsive for carrying an electric current, can be at least partially disposed next to the cell terminals. This is achieved by extending the cell contact legs from a busbar body portion in a direction non-parallel to a busbar extension direction. As the cell terminals protrude upward from the battery cell case, there is a space next to the battery cell terminals that is normally unused by mounting the busbars on top of the battery cell terminals. The busbar body portion of the busbar of the invention can be disposed within this space next to the battery cell terminals, e.g. by contacting the cell terminals from the side via respective legs or by using bent legs for contacting the cell terminals from above, while positioning the busbar body portion next thereto. Then, the busbars body section is advantageously used for confining the gas exhaust channel and/or for forming a support surface as described.

Further, as the cell contacting legs extend from the busbar body portion in a direction non-parallel to the extension direction thereof, they provide improved plasticity (deformability) to the busbar of the invention. Exemplarily, the cell contacting legs can pivot to a certain extent around a connection portion to the busbar body portion. Therein, any deformation of the busbar, particularly of the cell legs relatively to the busbar body portion may be either elastically or plastically. Hence, the flexibility of the busbar is increased compared to conventional barshaped busbars. Thus, the busbar of the invention allows for compensation of dimensional changes of the battery module, e.g., due to cell swelling, as well as for compensating relative movement between the battery cells of the battery module. Hence, by damping mechanical loads due to the bending of the cell contact legs around their connection portion to the bus bar body portion, the probability of cracks of the busbar or the like is decreased and thus stability of the battery module is increased. Particularly, the busbar of the invention can be deformed in response to any displacement of the cell terminals it is connected to without reaching maximum strain, i.e., breaking point. Further, the busbar advantageously reduces the maximum load acting on the cell terminal.

Particularly preferred, the busbar body portion comprises a first body section, i.e. a first peripheral body section, and a second body section, i.e., a second peripheral body section, wherein the first body section and the second body section are spaced apart from each other in the extension direction of the busbar body portion, i.e. in the lengthwise direction of the battery module. Therein, the first and second body sections are spaced apart from each other by a third body section, i.e., a third central body section, of the busbar body portion. In other words, the third body section is disposed in between the first body section and the second body section. Thus, the busbar of this embodiment is divided into three parts.

Further preferred, at least one cell contact leg of the at least two cell contact legs extends from the first peripheral body section and at least one other cell contact leg of the at least two cell contact legs extends from the second peripheral body section. In other words, at least one cell contact leg extends from each of the first and second body section, respectively. Particularly, a first plurality of cell contact legs extends from the first body section and a second plurality of cell contact legs extends from the second body section, wherein the first plurality of legs equals the second plurality of legs. Further preferred, the first body section and the second body section are of essentially the same length in lengthwise direction of the battery module and preferably the first, second and third body sections are of essentially the same length in the lengthwise (alignment) direction of the battery module.

Further preferred, the length of the first body section corresponds to the spatial extension of the respective cell terminals connected to the first body section via respective cell contact legs. Therein, said length and said spatial extension refer to the extension direction of the busbar body portion, i.e., the lengthwise direction of the battery module. Exemplarily, if two cell terminals are connected via one or two cell contact legs to the first body section, the length of the first body section corresponds to the spatial extension of two battery cell terminals, preferably of two battery cell(s) (cases). Then, also two cell terminals are connected via one or two cell contact legs to the second body section, wherein the length of the latter corresponds to the spatial extension of two battery cell terminals, preferably to the spatial extension of two battery cell(s) (cases). Further preferred then also the length of the third section corresponds to the spatial extension of two battery cell terminals, particularly preferred of two battery cell(s) (cases), in the lengthwise direction of the battery module. Setting the length of the third body section equal to the length of the first and second body section advantageously allows for a double layer busbar configuration as explained below.

Particularly preferred, at least two cell contact legs extend from the first peripheral body section and at least two cell contact legs extend from the second peripheral body section. Hence, at least two cell terminals are connected to each of these body sections. Within each body section, the cell contact legs are separated (spaced apart) from each other in the extension direction of the busbar body portion, i.e., the lengthwise direction of the battery module, respectively. Particularly, the at least two cell contact legs extending from the first peripheral body section are spaced apart from each other and the at least two cell contact legs extending from the second peripheral body section are spaced apart from each other. Naturally, also the cell contact legs of the first and second body portion are spaced apart. By separating the cell contact legs, i.e., by contacting each cell terminal with a single cell contact leg, the plasticity of the busbar is further increased, providing the advantages defined above.

Particularly preferred, the at least two cell contact legs that extend from the first peripheral body section are separated from each other by at least one first cutout. Further, the at least two cell contact legs that extend from the second peripheral body section are preferably separated by at least one second cutout. In other words, within a body section a cutout is disposed between each two adjacent cell contact legs. The material in the region of such cutout was preferably removed after casting a monolithic busbar blank. The cutouts, e.g., the first and second cutouts, preferably extend into the respective peripheral body section. Therein, each cutout may be oriented in parallel to the cell contact legs in between the cell contact legs and might change direction within the respective peripheral body section.

Exemplarily, an end of such cutout not disposed between cell contact legs may extend in an extension direction of the busbar body portion. With such preferred cutouts, the plasticity of the busbar is advantageously further increased. By extending the cutouts in the peripheral body sections, particularly preferred with an amended extension direction of the cutout within these body sections, mechanical properties of the busbar may advantageously be selectively adapted. Further preferred, additional cutouts may be arranged within the cell contact legs, e.g. one or more cutouts within each of the legs and/or within the third central body section.

Particularly preferred the height of the busbar according to this embodiment, particularly preferred the height of the busbar body portion thereof, is substantially smaller than the width and the length of the busbar. Therein the length of the busbar may refer to (correspond/be measured in) an extension direction of the busbar and the width may refer to (correspond/be measured in) a direction perpendicular to the extension direction. The height may then refer to (correspond/be measured in) a direction perpendicular to the length direction and the width direction of the busbar. Preferably, the height of the busbar, particularly preferred the height of the busbar body portion, is smaller than the height of the cell terminals to which the busbar, e.g. the peripheral busbar body sections, is connected via respective cell contact legs. Therein, in the context of this application, the height of the terminals refers to the extension of the cell terminals above a cap plate of a battery cell case, e.g. along the battery module's height direction. This embodiment allows for a particularly compact battery module.

According to a preferred embodiment of the battery module of the invention, at least one of the body sections of the busbar as described above extends in the lengthwise direction of the battery module with a spatial extension that corresponds to the spatial extension of at least one battery cell in the lengthwise direction of the battery module. In other words, at least one of the body sections has a length in the lengthwise direction of the battery module that is at least the length of one battery cell, i.e. one battery cell casing, in the lengthwise direction of the battery module. Particularly preferred, each of the body sections of the busbar has a spatial extension in the lengthwise direction of the battery module that corresponds to the spatial extension of at least one battery cell in the lengthwise direction of the battery module. Therein, as described in detail below, an extension of each body section that corresponds to the extension of one battery cell allows for a 1pYs configuration. Particularly preferred, an extension of each body section of the busbar corresponds to the extension of X battery cells, wherein such busbar advantageously allows for an XpYs configuration of the battery module.

Therein, for each busbar of the first sublayer of busbars a busbar of the second sublayer of busbars exists that is shifted in the lengthwise direction of the battery system by the length of one body section of the busbars according to the invention, this length referring to an extension of the busbar section in the lengthwise direction of the battery module. As the body sections of the busbar are preferably each of the same length in said direction, the busbars of the first and second sublayer of busbars are shifted along said direction by the length of any of these sections. In other words, the first or second peripheral body section of a busbar of the first sublayer of busbars is preferably overlaid with a third central body section of a busbar of the second sublayer of busbars. In other words, the busbars of the first sublayer of busbars partially overlap the busbars of the second sublayer of busbars.

Further preferred, if the extensions of the busbar's body sections correspond to the extension of a single battery cell, one battery cell of the first and second subset may follow each other in alternating fashion. If the extensions of the body sections of the busbars correspond to the extension of two battery cells, pairs of battery cells of the first and second subset may follow each other in alternating fashion. If the extensions of the busbar's body sections correspond to the extension of a plurality of battery cells, corresponding pluralities of battery cells of the first and second subset may follow each other in alternating fashion. Therein the length of at least one, particularly preferred of each, of the body sections of the busbars preferably corresponds to the spatial extension of battery cells connected in parallel within the module.

Further, any battery cell of the battery module may be connected to a busbar of the first sublayer of busbars and to a busbar of the second sublayer of busbars, e.g. for providing an electrical connection between the first and second sublayers of busbars. Hence, an electrical connection between a first module terminal and a second module terminal can be closed via the first sublayer of busbars, the second sublayer of busbars, and the battery cells of the battery module. A battery module may comprise further busbar elements, e.g., third busbar elements, which are configured for providing an electrical connection between the first and second sublayer of busbars and/or the first and second subset cells and/or for providing an electrical connection between battery module terminals and the battery cells. Further, other distributions of the battery cells of the first and second subset of battery cells, e.g. wherein the interleaved pluralities comprise different amounts of cells, are preferred.

According to a particularly preferred embodiment of the battery module of the invention, a busbar of the first sublayer of busbars comprises a busbar body portion that is configured to be placed next to a cell terminal and has at most the height of a cell terminal. The busbar of the first sublayer of busbars preferably further comprises at least one leg with a cell terminal contact portion that is spaced apart from the busbar body portion in a height direction thereof, i.e. in a height direction of the battery module. Preferably all of the cell contact legs of the busbar of the first sublayer of busbars comprise such cell terminal contact portion. Further preferred, the busbar of the first sublayer of busbars comprises a bridging portion that is configured for connecting the busbar body portion and the (respective) cell terminal contact portion. Particularly preferred, an individual bridging portion is provided for each cell terminal contact portion. This embodiment advantageously allows for contacting the cell terminals from above while positioning busbars of the first sublayer next to the cell terminals.

In this embodiment a busbar of the second sublayer of busbars is preferably of planar shape with at most the height of a cell terminal. Particularly preferred, the planar shape of a busbar of the second sublayer of busbars corresponds to the height of the cell terminals and the height of a busbar of the first sublayer of busbars. Hence, if the busbar of the second sublayer of busbars are disposed on the busbars of the first sublayer of busbars and next to the cell terminals, the cell contact legs of the busbar of the second sublayer can extend over the cell terminals without being bent. However, other shapes of the busbars of the second sublayer of busbars could be considered. In this embodiment, the gas exhaust channel is preferably confined by lateral side surfaces of the busbars of both of the sublayers.

Further preferred the height of a busbar of the first sublayer of busbars and of a busbar of the second sublayer of busbars is equal to half of the height of the cell terminals, respectively. Then, the height of a busbar of the second sublayer of busbars stacked upon a busbar of the first sublayer of busbars is advantageously aligned with the height of the cell terminals of the battery module. According to this embodiment, the busbars of the second sublayer of busbars also require cell contact legs with a cell terminal contact portion spaced apart from the bus bar body portion in a height direct therefor for contacting the cell terminals and further require a bridging portion for connecting the respective cell terminal contact portions and the busbar body portion as described above. Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery module according to the prior art;
- Fig. 2: illustrates a schematic top view of a busbar according to an example;
- Fig. 3: illustrates a schematic perspective view of a battery module according to an embodiment;
- Fig. 4: illustrates a schematic exploded perspective view of a battery module according to an embodiment;
- Fig. 5: illustrates a schematic exploded perspective view of the busbar layers of a battery module according to an embodiment;
- Fig. 6: illustrates a schematic perspective view of a Flexible Printed Circuit according to an embodiment; and
- Fig. 7: illustrates a schematic detailed perspective view of a battery module according to an embodiment; and
- Fig. 8: illustrates schematic top views of connection schemes of battery modules according to embodiments.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention, which is defined by the appended claims, to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

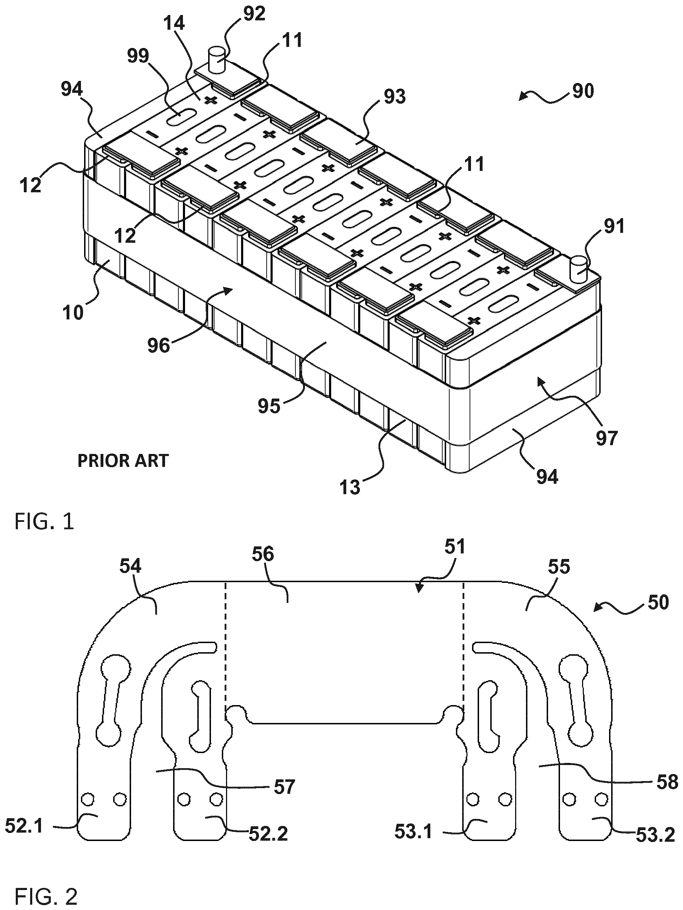

Figure 1 illustrates a battery module 90 according to the prior art comprising twelve prismatic battery cells 10 that are connected in series between a first module terminal 91 and a second module terminal 92. In other words, the battery module 90 has a 12s1p configuration. Each battery cell 10 has a battery case 13 with a cap assembly 14 placed on the battery case 13, wherein a gas exhaust vent 99 is disposed in the cap assembly 14. Within the battery module 90 the battery cells 10 are stacked in a lengthwise direction with their wide side surfaces such that first lateral walls of adjacent battery cells 10 face each other. As a result, the battery module 90 comprises a rectangular shape with a wide module side surface 96 extending in the lengthwise direction and a narrow module side surface 97 extending perpendicular thereto. First cell terminals 11 and second cell terminals 12 of neighboring battery cells 10 are electrically connected through a bus bar 93, respectively. Spacers 94 are positioned adjacent to the outward facing wide side surface of the outermost battery cells 10 and hence terminate the battery module 90 in the lengthwise direction. A ribbon 95 runs around the battery module 90 and compresses it in the lengthwise direction.

Figure 2 illustrates a schematic top view of a busbar 50 according to an example and as preferably utilized in a battery module 100 according to an embodiment of the invention. Therein, the planar busbar 50 comprises a busbar body portion 51 consisting of a first peripheral body section 54 and a second peripheral body section 55 that are separated by a central body section 56 interposed between the first and second body sections 54, 55. The central body section 56 is of rectangular shape, whereas upper corners of the peripheral body sections 54, 55 are rounded and wherein these sections are further processed as described below. The busbar body portion 51 extends within an extension direction thereof, which is the horizontal direction of Figure 2, i.e. has its largest extension in this direction.

A pair of two cell contact legs 52.1, 52.2 extends from the first peripheral body section 54 and a pair of two cell contact legs 53.1, 53.2 extends from the second peripheral body section 55. Each of these legs 52, 53 extends in a direction that is perpendicular to the extension direction of the busbar body section 51, particularly in downward vertical direction of Figure 2. Each of these cell contact legs 52, 53 is configured to be connected to a cell terminal 11, 12 as illustrated exemplarily in Figure 1. Thus, the busbar body section 51 can advantageously be positioned next to the cell terminals 11, 12 in a space-saving manner.

The cell contact legs 52.1, 52.2 extending from the first body section 54 are separated from each other by a first cutout 57. That is, the cutout 57 forms a void space between the legs 52.1, 52.2 and extends there in a direction perpendicular to the extension direction of the bus bar body 51. Above that, the cutout 57 extends into the first peripheral body section 54 of the busbar body portion 51. In extending there, the cutout 57 changes its direction such that a terminal portion of cutout 57 within first body section 54 extends parallel to the extension direction of the busbar body portion 51. In other words, by extending the cutout 57 into the first body section 54, the cell contact legs 52 are prolonged almost to the central body section 56 (naturally with a change of direction). The cell contact legs 53.1, 53.2 extending from the second body section 55 are separated from each other by a second cutout 58 that forms a void space between legs 53.1, 53.2 and further extends there in a direction perpendicular to the extension direction of the bus bar body 51. Cutout 58 further extends into the second peripheral body section 55 of the busbar body portion 51 and changes its direction in doing so. A terminal portion of cutout 58 within second body section 55 extends antiparallel to the extension direction of the busbar body portion 51. In other words, by extending cutout 58 into the second body section 55, the cell contact legs 53 are prolonged almost to the central body section 56 (naturally with a change of direction).

The cutouts 57, 58 increase the plasticity of busbar 50, particularly of the cell contact legs 52, 53 and particularly within the extension direction of the busbar body section 51. The plasticity of busbar 50 is further increased by providing bores at conjunctions of the second and third cell contact leg 52.2, 53.1 and the central body section 56 of the busbar body portion 51, respectively. Further cutouts in the cell contact legs 52.1, 52.2 also improve the plasticity of the busbar 50.

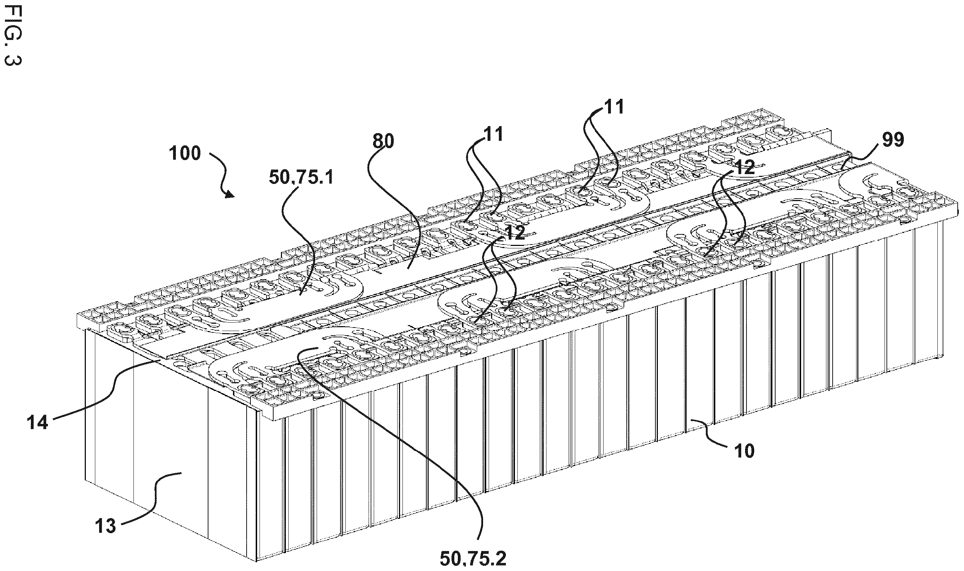

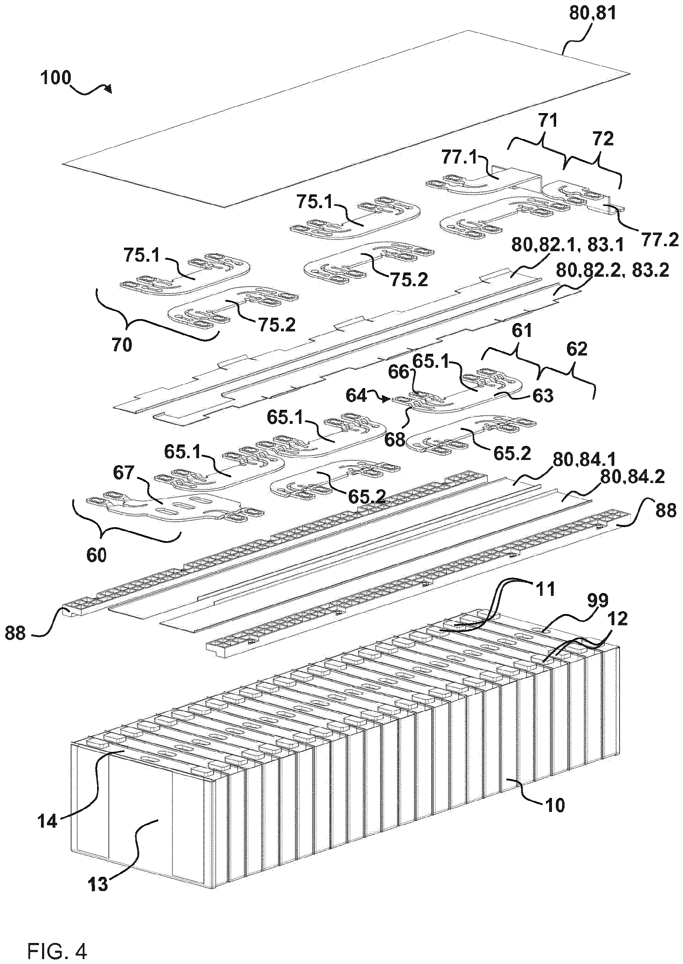

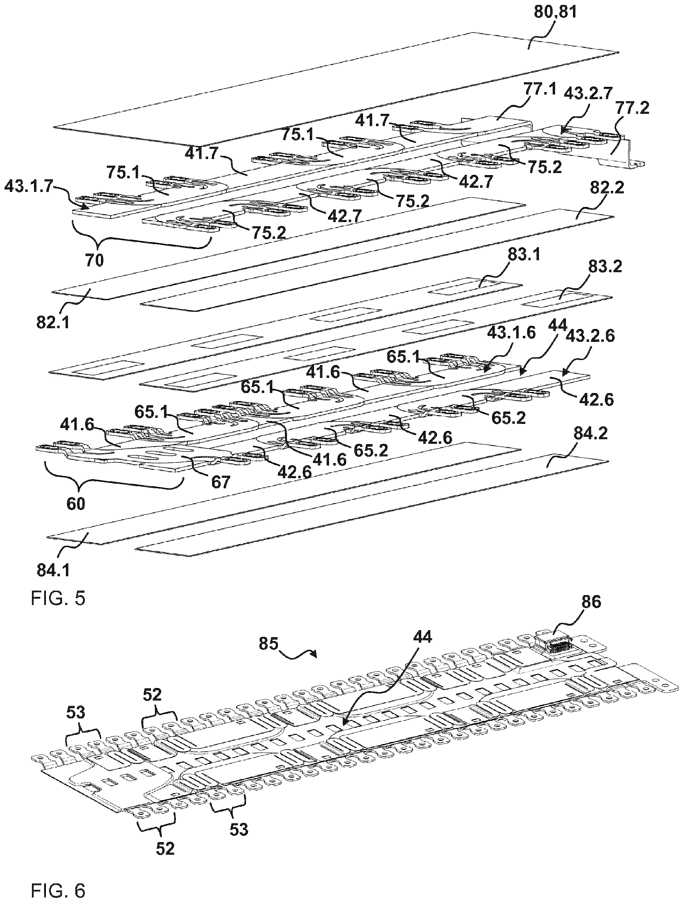

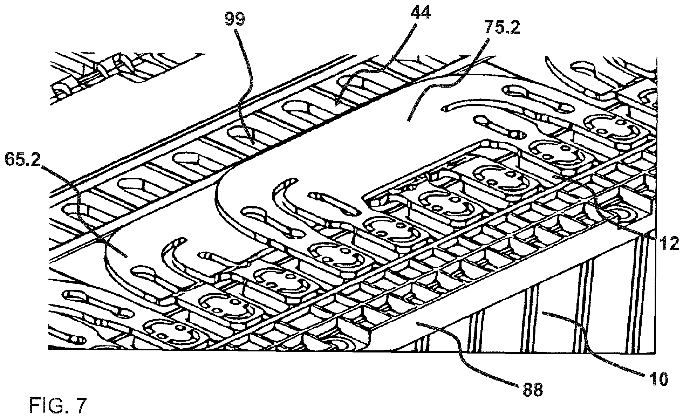

Figures 3 to 5 illustrate a battery module 100 according to an embodiment, wherein Fig. 3 illustrates a schematic perspective view thereof, Figure 4 illustrates an exploded view thereof and Figure 5 illustrates an exploded view of a top region thereof. Above that Figure 7 illustrates a detailed view of the battery module 100 according to the embodiment.

The battery module 100 of Figures 3 to 5 and 7 comprises a plurality of battery cells 10 that are stacked in a lengthwise direction of the battery module 100. Each of the battery cells 10 comprises a battery case 13 for receiving an electrode assembly that is covered by a cap assembly 14. A gas exhaust vent 99 that allows for discharging vent gases in an abnormal operation condition of the battery cell 10 is disposed in the cap assembly 14. Each cell 10 further comprises a first cell terminal 11 and a second cell terminal 12 separated from each other by the gas exhaust vent 99 of that cell 10. In the battery module 100, the first cell terminals 11 are aligned along one side of the battery module 100 and the second cell terminals 12 are aligned along another side of the battery module 100. A plurality of busbars 50, e.g. as illustrated in Figure 2, are utilized to interconnect the terminals 11, 12 of the battery cells 10 in order to form a 2p14s configuration of the battery module 100. Therein, a first subset of busbars 61,71 connects the first cell terminals 11 of the battery cells 10 and a second subset of busbars 62, 72 connects the second cell terminals 12 of the battery cells 10. An embodiment of the detailed current routing, i.e., of the current path among the battery cells 10 is illustrated in more detail in Figure 7. Figure 3 shows mainly the busbars 75.1, 75.2 of an upper second sublayer 75 of busbars connecting first 11 and second cell terminals 12, respectively. Figure 7 shows in more detail also the shifted, i.e., partially overlapping, busbars 65.2, 75.1 with one busbar 65.2 of the first (lower) sublayer 60 of busbars 65 and one busbar 75.1 of the second (upper) sublayer 70 of busbars 75.

As shown in the exploded view of Figure 4, the edges of the plurality of aligned battery cells 10 are covered by edge protectors 88 that increase the mechanical stability of the battery module 100. Further, an insulating layer 84.1 is disposed between the first terminals 11 and the gas exhaust vents 99 of the battery cells 10 and another insulating layer 84.2 is disposed between the second terminals 12 and the gas exhaust vents 99 of the battery cells 10 (within one stratum/layer). These insulating layers 84.1, 84.2 realize an electric insulation between the cap assemblies 14 of the battery cells 10 and the busbars 65 of a first sublayers 60 of busbars that is disposed above the insulating layers 84.1, 84.2.

The first sublayer 60 of busbars 65 is divided in busbars 65.1 of a first subset 61 of busbars of the first sublayer 65 of busbars and in busbars 65.2 of a second subset 62 of busbars of the first sublayer 65 of busbars. In other words, within the first sublayer 60 of busbars, the busbars 65.1 of a first subset 61 connect first cell terminals 11 and the busbars 65.2 of a second subset 62 connect second cell terminals 12. The first sublayer 60 further comprises a third busbar 67 as described in more detail below.

Above the busbars 65, 67 of the first sublayer 60 further insulating layers 82, 83 are disposed in order to electrically insulate the busbars 65, 67 of the first sublayer 60 from a second sublayer 70 of busbars disposed above the first sublayer 60 of busbars. Particularly, two-layered insulating layer 82.1, 83.1 is disposed between the first subset 61 of busbars 65.1 of the first sublayer 60 of busbars and the first subset 71 of busbars 75.1 of the second sublayer 70 of busbars. Another two-layered insulating layer 82.2, 83.2 is disposed between the second subset 62 of busbars 65.2 of the first sublayer 60 of busbars and the second subset 72 of busbars 75.2 of the second sublayer 70 of busbars. A more detailed view of the further insulating layers 82.1, 83.1, 82.2, 83.2 is illustrated in Figure 5.

The insulating layers 82.1, 83.1, 82.2, 83.2 as well as the insulating layers 84.1, 84.2 are disposed only in the area of the busbar body sections 51 of busbars 65, 75, while the cell contact legs 52, 53 of busbars 65, 75 as described with respect to Figure 2 are kept free from any insulating layer 82, 83, 84. Hence, an electrical connection can be realized between the cell terminals 11, 12 and the busbars 65.1, 65.2, 75.1, 75.2 of the first and second subsets of busbars 60, 70, respectively. At the same time the busbars 65, 75 from the first and second sublayers 60, 70 of busbars can be electrically isolated from each other by the insulating layers 82, 83 and from the battery cases 13 by the insulating layer 84.

The second sublayer 70 of busbars comprises a third busbar 77.1 that is electrically connecting two outermost battery cells 10 to a first module terminal and a third busbar 77.2 electrically connecting two adjacent battery cells 10 to a second module terminal. In order to electrically insulate the second sublayer 70 of busbars 75, 77 from the environment, an insulating top cover 81 is disposed on the busbars 75, 77 of the second sublayer 70 of busbars. Therein, the top cover 81 is covering the projected top surfaces of battery cells 10, the busbars of the first and second sublayer 60, 70 and the other two insulating layers 82, 84.

Detailed views of a top section of the battery module 100 according to Figures 3 and 4 are illustrated in Figures 5 and 7. Therein, the top section of the battery module 100 comprises the insulating layers 82, 83, 84, the first sublayer 60 of busbars 65, 67, the second sublayer 70 of busbars 75, 77 and the top cover 81. Therein, insulating layer 84 forms the lowermost layer of the top section and is configured to partially cover the cap assemblies 14 of the battery cells 10 as shown in Figure 4. Particularly, the insulating layer 84 comprises layers 84.1, 84.2, disposed between the gas exhaust vent 99 and the first 11 and second terminals 12, respectively. The first subset 61 of the first sublayer 60 of busbars 65.1 and the second subset 62 of the first sublayer 60 of busbars 65.2 is disposed on top of these insulating layers 84.1 84.2, respectively. Therein, first sublayer 60 comprises busbars 65 and third busbar 67 and further comprises inlays 41,42 disposed within the first sublayer 60.

The inlays 41, 42 do not extend over the busbars 65, 67 in a height direction of the busbars 65, 67 of the first subset 60 in order to form a layer with these busbars65, 67. Further, each of these inlays 41, 42 is positively molded to at least one busbar 65, 67, i.e. is form-fitting to an exterior shape of at least one busbar 65, 67. Particularly, inlays 41.6 are positively molded to the first subset 61 of the first sublayer 60 of busbars 65.1, wherein three inlays 41.6 are positively molded to two busbars 65.1, 67 and one inlay 41.6 is positively molded to only one busbar 65.1. Further, inlays 42.6 are positively molded to the second subset 62 of the first sublayer 60 of busbars 65.2, wherein two inlays 42.6 are positively molded to two busbars 65.2, 67 and two inlays 42.6 are positively molded to only one busbar 65.2, 67. The inlays 41 and the busbars 65.1 of the first subset 61 of the first sublayer 60 of busbars form a first continuous support surface 43.1.6 and the inlays 42 and the busbars 65.2 of the second subset 62 of the first sublayer 60 of busbars form a second continuous support surface 43.2.6. The first and second continuous support surfaces 43.1.6, 43.2.6 are connected to each other by inlays 41.1, 42.6 positively molded to the third busbar 67, respectively. The continuous support surfaces 43,1.6, 43.2.6 are preferably of overall equal height and form a common straight and level support surface. Particularly preferred, the inlays 41.6, 42.6 are injection molded to the busbars 65, 67 in order to fill the gaps in between them and to mechanically consolidate the first sublayer 60 of busbars.

Above this layer comprising the first sublayer 60 of busbars and the inlays 41,6, 42.6, two further insulating layers 82, 83 are disposed that have similar extensions as the insulating layer 84. In other words, insulating layer 82 comprises a first partial layers 82.1 extending in a region between the first terminals 11 and the gas exhaust vents 99 and a second partial layer 82.2 extending in a region between the second terminals 12 and the gas exhaust vents 99. Further, insulating layer 83 comprises a first partial layers 83.1 extending in the region between the first terminals 11 and the gas exhaust vents 99 and a second partial layer 83.2 extending in between the second terminals 12 and the gas exhaust vents 99.

Above these further insulating layers 82, 83, a second sublayer 70 of busbars is disposed that is electrically insulated from the first sublayer 60 of busbars 65, 67 via the insulating layers 82, 83. Particularly, the first subset 71 of busbars 75.1 of the second sublayer 70 and the second subset 72 of busbars 75.2 of the second sublayer 70 are disposed on top of the insulating layers 82.1, 83.1 and on top of the insulating layers 82.2, 83.2, respectively. Further, the second sublayer 70 comprises busbars 75 and a third busbar 77 as described above and further comprises inlays 41, 42 disposed within this sublayer 70 of busbars .

The inlays 41, 42 do not extend over the busbars 75, 77 in a height direction of the busbars 75, 77 in order to form a layer with these busbars 75, 77. Further, each of these inlays 41, 42 is positively molded to at least one busbar 75, 77 i.e., is form-fitting to an exterior shape of at least one busbar 75, 77. Particularly, inlays 41.7 are positively molded to the first subset 71 of busbars 75.1 of the second sublayer 70, wherein two inlays 41.7 are positively molded to two busbars 75.1, 77.1 and one inlay 41.7 is positively molded to only one busbar 75.1. Further, inlays 42.7 are positively molded to the second subset 72 of busbars 75.2 of the second sublayer 70, wherein three inlays 42.7 are positively molded to two busbars 75.2, 77.2. and one inlay 42.7 is positively molded to only one busbar 75.2. The inlays 42 and the busbars 75.1 of the first subset 71 of busbars 75.1 of the second sublayer 70 form a first continuous support surface 43.1.7 and the inlays 42 and the busbars 75.2 of the second subset 72 of the second sublayer 70 of busbars form a second continuous support surface 43.2.7. The first and second continuous support surfaces 43.1.7, 43.2.7 are not connected. The continuous support surfaces 43,1.7, 43.2.7 preferably are of overall equal height and form individual straight and level support surfaces. Particularly preferred, the inlays 41.7, 42.7 are injection molded to the busbars 75, 77 in order to fill gaps in between and to consolidate the first sublayer 60 of busbars as a mechanically stable layer.

Above this layer, comprising the second sublayer 70 of busbars 75, 77 and inlays 41, 42 forming continuous support surfaces 43.1.7, 43.7.7, an insulating top cover 81 is disposed, which is fully covering the projected surfaces of the cap assemblies 14 of the battery cells 10. Hence, in the battery module as shown in Figures 3 to 5 and 7, a gas exhaust channel 44 is formed between the insulating layers 82.1 and 82.2, the insulating layers 83.1 and 83.2, the insulating layers 84.1 and 84.2, the first subset of busbars 61 and the second subset of busbars 62 of the first sublayer of busbars 60, the first subset of busbars 71 and the second subset of busbars 72 of the second sublayer of busbars 70 and the top cover 81. This channel extends along the gas exhaust vents 99 of the plurality of aligned battery cells 10 and may be further accessible through openings in the third busbar 77 of the first sublayer 60 of busbars. As the top cover 81 confines the gas exhaust channel 44 from above, it is fully enclosed by the cap assemblies 14, lateral walls of busbars 65, 75 and insulating layers 82, 83, 84 and the top cover 81. A detailed view of the gas exhaust channel formed by the aforementioned components is shown in Figure 7. Hence, venting gases emitted through the gas exhaust vents 99 of the battery cells 10 in an abnormal operation condition of the battery cells 10, e.g., during thermal runaway, can be disposed via the gas exhaust channel 44 along the lengthwise direction of the battery module 100 and can be outcast to the environment from a short side of the battery module 100. At the same time, the battery module 100 of Figures 3 to 5 and 7 has an improved mechanical stability, particularly in a top section thereof, and particularly due to the positively molded inlays 41, 42.

In the battery module 100 illustrated in the Figures 3 to 5, each of the busbars 65, 75 of the first and second sublayer 60, 70 of busbars is essentially of a comb-shape as illustrated in Figure 2 and comprises three body sections 54, 55, 56 forming the bus bar body section 51. Each of the body sections 54, 55, 56 has a spatial extension in the lengthwise direction of the battery module 100 that corresponds to the spatial extensions of the battery cases 13 of two battery cells 10 in the lengthwise direction of the battery module 100. Further, two cell contact legs 52, 53 extend from the peripheral body sections 54, 55 of each of busbars 65. Hence, each busbar 65,75 is configured to electrically connect the terminals 11, 12 of two pairs of battery cells 10, wherein one pair of battery cells 10 is disposed between the connected pairs of battery cells 10 and remains electrically isolated from the busbar 65 ,75.

According to an embodiment as further illustrated in Figure 6, the insulating layers 81, 82, 83, 84 and the first and second sublayers 60, 70 of busbars 65, 67, 75, 77 may form a flexible printed circuit, FPC, 85 when overlaid on each other. Therein, the outer insulating layers 81, 84 may be configured for encapsulating the remaining layers 60, 70, 82, 83 by forming an outer insulating shell around the remaining layers 60, 70, 82, 83.

Therein, the cell contact legs 52, 53 of the busbars 50 protrude laterally from the FPC 85 for contacting the cell terminals 11, 12 of the cells 10 of a battery module 100. Further, the inner insulating layers 82, 83 may comprise further metallizations or circuit components, e.g. of a Cell Supervision Circuit, CSC. Such circuit components may be configured for detecting and/or processing cell temperatures and/or voltages and may therefore comprise surface metallizations configured to electrically connect to the busbars 50. These metallizations may further be configured to connect to an integrated circuit, IC, 86 that may be configured for receiving signals corresponding to cell voltages and/or temperatures, for processing these signals, and/or for communicating with other components as connector. As further shown in Figure 6, a depression is formed in an upper surface of the FPC 85 extending in a lengthwise direction thereof, such that a gas exhaust channel 44 is formed in combination of the FPC 85 and the insulating top cover 81 as described above. For allowing the exhaust gases of the battery cells 10 to enter the gas exhaust path 44, a plurality of through openings is provide in the depression of the FPC 85 as illustrated in Figure 6. The main electric components 85 of the FPC may be provided above the second sublayer 70 of busbars 75, 77, below the first sublayer 60 of busbars 65, 67 or in between the sublayer 60 and sublayer 70 of busbars.

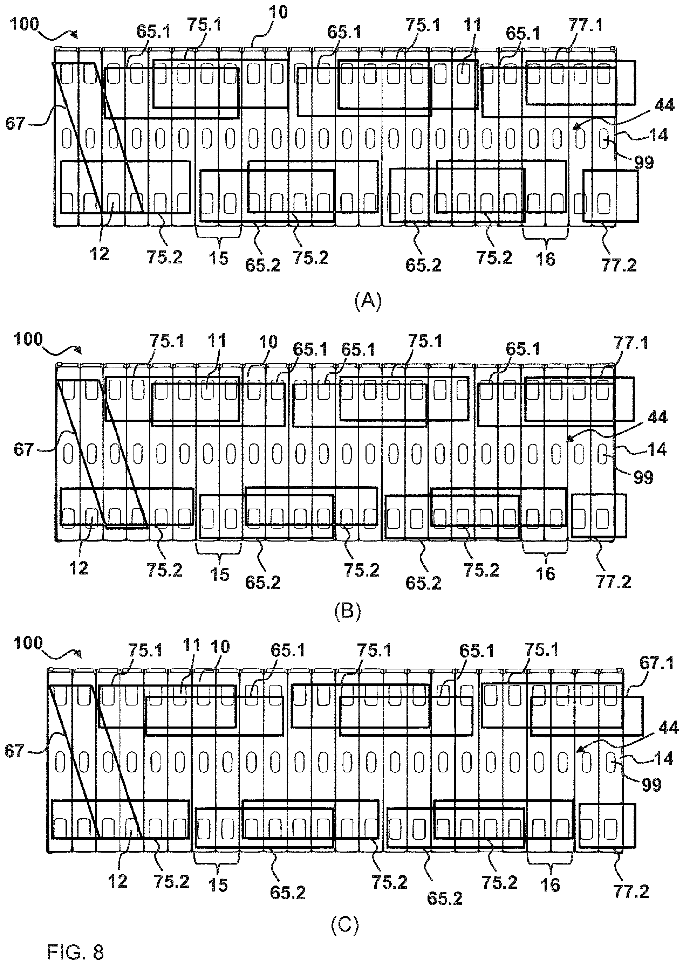

Figure 8 (B) illustrates the current path through the busbars 65, 67, 75, 77 of the battery module 100 according to Figures 3 to 7 in more detail and Figures 8 (A) and (C) illustrate alternative embodiments of current paths of such a battery module 100 in more detail. As can be seen from each of the Figures 8 (A) to (C), the gas exhaust channel 44 is at least partially confined by lateral side surfaces of the busbars of the first and second sublayers 60, 70 and subsets 61,71,62,72 of busbars, wherein the first subsets 61, 71 of the first and second sublayers 60, 70 of busbars confine an upper boundary of the gas exhaust channel 44 and the second subsets 62, 72 of the first and second sublayers 60, 70 of busbars confine an lower boundary of the gas exhaust channel 44. Hence, by using a double layered busbars arrangement as in the illustrated embodiments gas exhaust channel 44 is well confined.

A simple setup of a current path using busbars 65, 67 of a first sublayer 60 of busbars and busbars 75, 77 of a second sublayer 70 of busbars is shown in Figure 8 (A). Therein, a third busbar 77.1 of a first subset 71 of the (upper) second sublayer 70 of busbars connects a first module terminal with the first cell terminals 11 of a second pair of battery cells 10 (counted from the right side of the battery module 100). The second cell terminals 12 of this pair of battery cells 10 are connected via a busbar 75.2 of the second subset 72 of busbars of the second sublayer 70 to the second cell terminals 12 of the next but one pair of battery cells 10 (towards the left). In other words, the busbar 75.2 does not connect to the cell terminals of an adjacent pair of battery cells 10. However, the first terminals 11 of the next but one pair of battery cells 10 connected via the busbar 75.2 are then connected via another busbar 75.1 of the first subset 71 of the second sublayer 70 to a next but one pair of battery cells 10 (to the left) and the second cell terminals 12 of this pair of battery cells 10 is then connected via another busbar 75.2 to a next but one pair of battery cells 10 (to the left). After two more busbars 75.1, 75.2, the second cell terminals 12 of an outermost pair of battery cells 10 on a left side of the battery module 100 are reached.

Hence, in the embodiment of Figure 8 (A), the busbars 75.1, 75.2 of the second sublayer 70 connect a second subset 16 of battery cells 10, which is formed by pairs of battery cells 10 starting from the second pair of battery cells 10 counted from a right side of the battery module 100 to the outermost pair of battery cells 10 at a left side of the battery module 100 and being interleaved with pairs of battery cells 10 of a first subset 15 of battery cells 10 as described below. The first cell terminals 11 of this leftmost (outermost) pair of battery cells 10 are connected via a third busbar 67 to the second cell terminals 12 of an adjacent pair of battery cells 10. Therein, the third busbar 67 provides a transition between the first subset 71 of the second sublayer 70 of busbars to the second subset 62 of the first sublayer 60 of busbars. Hence, third busbar 67 of Figure 8 (A) is preferably of a bent configuration and extends through any insulating layer 82, 83 disposed between the first and second sublayers 60, 70 of busbars. The first cell terminals 11 of the adjacent pair of battery cells 10 are then connected via a busbar 65.1 of the first subset 61 of the first sublayer 60 of busbars to the first cell terminals 11 of a next but one pair of battery cells 10 and so forth until a busbar 65.1 of the first subset 61 of the first sublayer 60 of busbars provides a connection to the first terminals 11 of an outermost pair of battery cells 10 on the right end of the battery module 100. Thus, busbars 65.1 connect a first subset 15 of battery cells 10, which is formed by pairs of battery cells 10 starting from the outermost pair of battery cells 10 counted from a right side of the battery module 100 to a second pair of battery cells 10 counted from the left side of the battery module 100, and wherein the pairs of cells 10 of the first subset 15 of cells 10 are interleaved with the pairs of cells 10 of the second subset 16 of cells 10 as described above. The second terminals 12 of the rightmost (outermost) pair of battery cells 10 are then connected to a second module terminal via a third busbar 77.2 of the second sublayer of busbars 70.

An alternative configuration of the current path through the battery module 100 provided by busbars 65, 67, 75, 77 is illustrated in Figure 8 (B). Therein, a current path again starts with a third busbar 77.1 of a second sublayer 70 of busbars, the third busbar 77,1 connecting a first module terminal with the first cell terminals 11 of a second pair of battery cells 10 (counted from the left side of the battery module 100). Then, the current path proceeds via three further busbars 75.1, 75.2 of the first and second subset 71, 72 of the second sublayer 70 of busbars as described with respect to Figure 8 (A). However, while the second cell terminals 12 of a fifth pair of battery cells 10 counted from the left side of the battery module 100 are connected to a busbar 75.2, the first terminals 11 of this pair of battery cells are connected to a busbar 65.1. Hence, a transition between second subset 72 of second sublayer 70 of busbars to lower first subset 61 of first sublayer of busbars 60 is provided.

However, after said busbar 65.1 connects said first cell terminals 11 of said fifth pair of battery cells 10 to the first cell terminals 11 of a third pair of battery cells 10 counted from the left side of the battery module 100, the second cell terminals 12 of said third pair of battery cells 10 are again connected via a busbar 75.2 to the second cell terminals 12 of the outermost left pair of battery cells 10. The first cell terminals 11 of this outermost left pair of cells 10 are then connected via third busbar 67 to the second cell terminals 12 of an adjacent pair of battery cells 10. The first cell terminals 11 of said adjacent pair of cells 10 is then again connected via a busbar 75.1 to the terminals of a next but one pair of battery cells 10. Hence, solely busbars 75 of the second sublayer 70 of busbars surround third busbar 67 of the first sublayer 60 of busbars and hence electric insulation between these busbars 67, 75 is advantageously ensured despite any possible overlap between these busbars 67, 75.

A further alternative configuration of the current path through the battery module 100 provided by busbars 65, 67, 75, 77 is illustrated in Figure 8 (C). Therein, and in contrast to the embodiments of Figures 8 (A) and (B), a third busbar 67.1 of the first sublayer 60 of busbars connects a first module terminal with the first cell terminals 11 of a second pair of battery cells 10 (counted from the left side of the battery module 100). The second cell terminals 12 of said second pair of battery cells 10 are then connected via a busbar 75.2 of the second subset 72 of the second sublayer 70 of busbars to the second cell terminals 12 of a next but one pair of cell 10. The first cell terminals 11 of said next but one pair of cells 10 are then again connected via a busbar 65.1 of said first sublayer 60 of busbars and so forth.

In other words, each pair of battery cells 10 is connected to one other pair of battery cells 10 via a busbar 65 and to another pair of battery cells 10 via a busbar 75. In other words, a transition between the upper (second) and lower (first) sublayers 60, 70 of busbars is provided via each pair of battery cells 10. This again provides the advantage that solely busbars 75 of the second sublayer 70 of busbars surround third busbar 67 of the lower first sublayer 60 of busbars, which is connecting the two outermost left pairs of battery cells 10, and hence electric insulation between these busbars 67, 75 is ensured despite any potential overlap between these busbars 67, 75. However, in the embodiment of Figure 8 (C) the second cell terminals 12 of an outermost right pair of battery cells are connected via a third busbar 77.2 of the second sublayer 70 of busbars to a battery module terminals and hence the battery module terminals are provided on different layers of busbars 60, 70.

### Reference signs

- 10: battery cells
- 11: positive cell terminal
- 12: negative cell terminal
- 13: battery case
- 14: cap assembly
- 15: first set of battery cells
- 16: second set of battery cells

- 40: inlay
- 41: first subset of inlays
- 42: second subset of inlays
- 43: support surface
- 44: gas exhaust channel

- 50: busbar
- 51: busbar body portion
- 52: cell contact leg
- 53: cell contact leg
- 54: first peripheral body section
- 55: second peripheral body section
- 56: third central body section
- 57: first cutout
- 58: second cutout
- 60: first (lower) sublayer of busbars
- 61: first subset of busbars
- 62: second subset of busbars
- 63: busbar body portion
- 64: cell contact leg
- 65: busbar
- 66: cell terminal contact portion
- 67: third busbar
- 68: bridging portion
- 70: second (upper) sublayer of busbars
- 71: first subset of busbars
- 72: second subset of busbars
- 75: busbar
- 77: third busbar

- 80: insulating layers
- 81: insulating top cover
- 82: insulating layer
- 83: insulating layer
- 84: insulating layer
- 85: flexible printed circuit (FPC)
- 86: integrated circuit (IC)

- 90: battery module (prior art)
- 91: negative module terminal (prior art)
- 92: positive module terminal (prior art)
- 93: busbar (prior art)
- 94: spacer (prior art)
- 95: ribbon (prior art)
- 96: wide module side surface (prior art)
- 97: narrow module side surface (prior art)
- 99: gas exhaust vent (prior art)

- 100: battery module

## Claims

1. Battery module (100), comprising
a plurality of aligned battery cells (10), each of the battery cells (10) comprising an electrode assembly accommodated in a battery case (13), a cap assembly (14) placed on the battery case (13), a gas exhaust vent (99) in the cap assembly (14), and cell terminals (11, 12) protruding over the cap assembly (14);
a plurality of busbars (50,60,70) disposed on top of the cap assemblies (14), each of the busbars (50,60,70) being configured for electrically connecting at least two battery cells (10) via their cell terminals (11, 12) and the plurality of busbars (50,60,70) being configured for conducting the current of the battery module (100);
a plurality of inlays (40, 41, 42) each being positively molded to at least one busbar (50,60,70) and having at most the height of the at least one busbar (50,60,70); and
a top cover (81) disposed on top of the busbars (50, 70, 75) and covering the cap assemblies (14) of the battery cells (10), the cell terminals (11, 12), the busbars (50,60,70), and the plurality of inlays (40, 41, 42),
wherein the plurality of busbars (50,60,70) and the plurality of inlays (40, 41, 42) form a continuous support surface (43) extending along the plurality of battery cells (10) in an alignment direction of the plurality of battery cells (10) and facing towards the top cover (81) for supporting the top cover (81).

2. Battery module (100) according to claim 1, wherein the plurality of busbars (50,60,70) and at least one of the plurality of inlays (40, 41, 42) form a level and/or straight support surface (43).

3. Battery module (100) according to claim 1 or 2, wherein the height of each of the plurality of inlays (40, 41, 42) corresponds to the height of each of the plurality of busbars (50,60,70).

4. Battery module (100) according to any one of the preceding claims, wherein the top cover (81) is an insulating top cover (80, 81) and/or wherein an insulating layer (80) is disposed between the top cover (81) and the plurality of busbars (50,60,70) .

5. Battery module (100) according to claim 1, wherein the continuous support surface (43) also extends along the plurality of battery cells (10) in a direction perpendicular to the alignment direction of the plurality of battery cells (10).

6. Battery module (100) according to any one of the claims 1 to 4,
wherein, for each of the plurality of battery cells (10), the gas exhaust vent (99) is disposed between a first cell terminal (11) and a second cell terminal (12),
wherein a first subset of busbars (61, 71) electrically interconnects the first cell terminals (11) and a second subset of busbars (62, 72) electrically interconnects the second cell terminals (12), and
wherein a first subset of inlays (41) is positively molded to the busbars (65.1,75.1) of the first set of busbars (61,71) and a second subset of inlays (42) is positively molded to the busbars (65.2,75.2) of the second set of busbars (62,72).

7. Battery module (100) according to claim 6, wherein a gas exhaust channel (44) is formed in the layer of busbars (50,60,70) and is extending along the gas exhaust vents (99) of the plurality of battery cells (10).

8. Battery module (100) according to claim 7, wherein the gas exhaust channel (44) is confined by the first subset of inlays (41), the second subset of inlays (42), the cap assemblies (14), and the top cover (81).

9. Battery module (100) according to any one of the preceding claims, comprising a first sublayer (60) of busbars (65) for interconnecting a first subset (15) of battery cells (10) and a second sublayer (70) of busbars (75) for interconnecting a second subset (16) of battery cells (10), the second sublayer (70) of busbars (75) being disposed over the first sublayer (60) of busbars (65), wherein the busbars (65) of the first sublayer (60) are shifted with respect to the busbars (75) of the second sublayer (70).

10. Battery module (100) according to any one of the preceding claims, wherein each busbar (50) of the plurality of busbars (50) comprises a busbar body portion (51) extending in the alignment direction of the battery module (100) and at least two legs (52, 53) extending from the busbar body portion (51) in a direction non-parallel to the alignment direction, the legs (52, 53) being configured for electrically connecting the busbar body portion (51) and the cell terminals (11, 12).

11. Battery module (100) according to claim 10, wherein the busbar body portion (51) comprises a first body section (54) with at least one leg (52) extending therefrom, a second body section (55) with at least one leg (53) extending therefrom, and a third body section (56) disposed in between the first (54) and second (55) body sections, the body sections (54, 55, 56) being of the same length in the alignment direction.

12. Battery module (100) according to claim 11 insofar it refers to claim 9, wherein the busbars (65) of the first sublayer (60) are shifted with respect to the busbars (75) of the second sublayer (70) by the length of one body section (54, 55, 56).

13. Battery module (100) of claim 11 or 12, wherein the body sections (54, 55, 56) extends in the alignment direction with a spatial extension that corresponds to the spatial extension of parallely connected battery cells (10) of the battery module (100).

14. Battery module (100) of claim 9, wherein the first sublayer (60) of busbars (65) is separated from the second sublayer (70) of busbars (75) via at least one electrically insulating layer (80).

15. Battery module (100) of any one of the claims 10 to 14 insofar they refer to claim 9,
wherein a busbar (65) of the first sublayer (60) comprises a planar busbar body portion (63) with at most the height of a cell terminal (11, 12) and a leg (64) with a cell terminal contact portion (66) that is spaced apart from the busbar body portion (63) in a height direction thereof and with a bridging portion (68) that is connecting the busbar body portion (63) and the cell terminal contact portion (66),
wherein a busbar (75) of the second sublayer of busbars (70) is of planar shape with at most the height of a cell terminal (11, 12).

## Patentansprüche

1. Batteriemodul (100), umfassend
eine Vielzahl von ausgerichteten Batteriezellen (1 0), wobei jede der Batteriezellen (10) eine in einem Batteriegehäuse (13) aufgenommene Elektrodenanordnung, eine auf dem Batteriegehäuse (13) angeordnete Kappenanordnung (14), eine Gasauslassöffnung (99) in der Kappenanordnung (14) und über die Kappenanordnung (14) vorstehende Zellenanschlüsse (11, 12) umfasst;
eine Vielzahl von Sammelschienen (50, 60, 70), die oben auf den Kappenanordnungen (14) angeordnet sind, wobei jede der Sammelschienen (50, 60, 70) zum elektrischen Verbinden von mindestens zwei Batteriezellen (10) über ihre Zellenanschlüsse (11, 12) konfiguriert ist und die Vielzahl von Sammelschienen (50, 60, 70) zum Leiten des Stroms des Batteriemoduls (100) konfiguriert ist;
eine Vielzahl von Einlagen (40, 41, 42), die jeweils formschlüssig mit mindestens einer Sammelschiene (50, 60, 70) verbunden sind und höchstens die Höhe der mindestens einen Sammelschiene (50, 60, 70) aufweisen; und
eine obere Abdeckung (81), die oben auf den Sammelschienen (50, 70, 75) angeordnet ist und die Kappenanordnungen (14) der Batteriezellen (10), die Zellenanschlüsse (11, 12), die Sammelschienen (50, 60, 70) und die Vielzahl von Einlagen (40, 41, 42) abdeckt,
wobei die Vielzahl von Sammelschienen (50, 60, 70) und die Vielzahl von Einlagen (40, 41) eine kontinuierliche Stützfläche (43) bilden, die sich entlang der Vielzahl von Batteriezellen (10) in einer Ausrichtungsrichtung der Vielzahl von Batteriezellen (10) erstreckt und der oberen Abdeckung (81) zugewandt ist, um die obere Abdeckung (81) zu stützen.

2. Batteriemodul (100) nach Anspruch 1, wobei die Vielzahl von Sammelschienen (50, 60, 70) und mindestens eine der Vielzahl von Einlagen (40, 41, 42) eine ebene und/oder gerade Stützfläche (43) bilden.

3. Batteriemodul (100) nach Anspruch 1 oder 2, wobei die Höhe jedes der Vielzahl von Einlagen (40, 41, 42) der Höhe jeder der Vielzahl von Sammelschienen (50, 60, 70) entspricht.

4. Batteriemodul (100) nach einem der vorhergehenden Ansprüche, wobei die obere Abdeckung (81) eine isolierende obere Abdeckung (80, 81) ist und/oder wobei eine Isolierschicht (80) zwischen der oberen Abdeckung (81) und der Vielzahl von Sammelschienen (50, 60, 70) angeordnet ist.

5. Batteriemodul (100) nach Anspruch 1, wobei sich die durchgehende Stützfläche (43) auch entlang der Vielzahl von Batteriezellen (10) in einer Richtung senkrecht zur Ausrichtungsrichtung der Vielzahl von Batteriezellen (10) erstreckt.

6. Batteriemodul (100) nach einem der Ansprüche 1 bis 4,
wobei für jede der Vielzahl von Batteriezellen (10) die Gasauslassöffnung (99) zwischen einem ersten Zellenanschluss (11) und einem zweiten Zellenanschluss (12) angeordnet ist,
wobei eine erste Untergruppe von Sammelschienen (61, 71) die ersten Zellenanschlüsse (11) elektrisch miteinander verbindet und eine zweite Untergruppe von Sammelschienen (62, 72) die zweiten Zellenanschlüsse (12) elektrisch miteinander verbindet, und
wobei eine erste Untergruppe von Einlagen (41) formschlüssig an die Sammelschienen (65.1, 75.1) des ersten Satzes von Sammelschienen (61, 71) geformt ist und eine zweite Untergruppe von Einlagen (42) formschlüssig an die Sammelschienen (65.2, 75.2) des zweiten Satzes von Sammelschienen (62, 72) geformt ist.

7. Batteriemodul (100) nach Anspruch 6, wobei ein Gasauslasskanal (44) in der Schicht von Sammelschienen (50, 60, 70) ausgebildet ist und sich entlang der Gasauslassöffnungen (99) der Vielzahl von Batteriezellen (10) erstreckt.

8. Batteriemodul (100) nach Anspruch 7, wobei der Gasauslasskanal (44) durch die erste Untergruppe von Einlagen (41), die zweite Untergruppe von Einlagen (42), die Kappenanordnungen (14) und die obere Abdeckung (81) begrenzt ist.

9. Batteriemodul (100) nach einem der vorhergehenden Ansprüche, umfassend eine erste Unterschicht (60) von Sammelschienen (65) zum Verbinden einer ersten Untergruppe (15) von Batteriezellen (10) und einer zweiten Unterschicht (70) von Sammelschienen (75) zum Verbinden einer zweiten Untergruppe (16) von Batteriezellen (10), wobei die zweite Unterschicht (70) von Sammelschienen (75) über der ersten Unterschicht (60) von Sammelschienen (65) angeordnet ist, wobei die Sammelschienen (65) der ersten Unterschicht (60) in Bezug auf die Sammelschienen (75) der zweiten Unterschicht (70) verschoben sind.

10. Batteriemodul (100) nach einem der vorhergehenden Ansprüche, wobei jede Sammelschiene (50) der Vielzahl von Sammelschienen (50) einen Sammelschienen-Körperabschnitt (51), der sich in der Ausrichtungsrichtung des Batteriemoduls (100) erstreckt, und mindestens zwei Schenkel (52, 53) umfasst, die sich von dem Sammelschienen-Körperabschnitt (51) in einer Richtung nicht parallel zu der Ausrichtungsrichtung erstrecken, wobei die Schenkel (52, 53) zum elektrischen Verbinden des Sammelschienen-Körperabschnitts (51) und der Zellenanschlüsse (11, 12) konfiguriert sind.

11. Batteriemodul (100) nach Anspruch 10, wobei der Sammelschienen-Körperabschnitt (51) einen ersten Körperabschnitt (54) mit mindestens einem sich davon erstreckenden Schenkel (52), einen zweiten Körperabschnitt (55) mit mindestens einem sich davon erstreckenden Schenkel (53) und einen dritten Körperabschnitt (56), der zwischen dem ersten (54) und dem zweiten (55) Körperabschnitt angeordnet ist, umfasst, wobei die Körperabschnitte (54, 55, 56) in der Ausrichtungsrichtung die gleiche Länge aufweisen.

12. Batteriemodul (100) nach Anspruch 11, soweit er sich auf Anspruch 9 bezieht, wobei die Sammelschienen (65) der ersten Unterschicht (60) gegenüber den Stromschienen (75) der zweiten Unterschicht (70) um die Länge eines Körperabschnitts (54, 55, 56) verschoben sind.

13. Batteriemodul (100) nach Anspruch 11 oder 12, wobei sich die Körperabschnitte (54, 55, 56) in Ausrichtungsrichtung mit einer räumlichen Ausdehnung erstrecken, die der räumlichen Ausdehnung von parallel geschalteten Batteriezellen (10) des Batteriemoduls (100) entspricht.

14. Batteriemodul (100) nach Anspruch 9, wobei die erste Unterschicht (60) von Sammelschienen (65) von der zweiten Unterschicht (70) von Sammelschienen (75) über mindestens eine elektrisch isolierende Schicht (80) getrennt ist.

15. Batteriemodul (100) nach einem der Ansprüche 10 bis 14, soweit sie sich auf Anspruch 9 beziehen,
wobei eine Sammelschiene (65) der ersten Unterschicht (60) einen ebenen Sammelschienen-Körperabschnitt (63) mit höchstens der Höhe eines Zellenanschlusses (11, 12) und einen Schenkel (64) mit einem Zellenanschluss-Kontaktabschnitt (66) umfasst, der von dem Sammelschienen-Körperabschnitt (63) in einer Höhenrichtung desselben beabstandet ist, und mit einem Überbrückungsabschnitt (68), der den Sammelschienen-Körperabschnitt (63) und den Zellenanschluss-Kontaktabschnitt (66) verbindet,
wobei eine Sammelschiene (75) der zweiten Unterschicht von Sammelschienen (70) eine ebene Form mit höchstens der Höhe eines Zellenanschlusses (11, 12) aufweist.

## Revendications

1. Module de batterie (100), comprenant
une pluralité d'éléments de batterie (10) alignés, chacun des éléments de batterie (10) comprenant un ensemble d'électrode logé dans un boîtier de batterie (13), un ensemble de capuchon (14) placé sur le boîtier de batterie (13), un évent d'échappement de gaz (99) dans l'ensemble de capuchon (14), et des bornes d'élément (11, 12) faisant saillie au-dessus de l'ensemble de capuchon (14) ;
une pluralité de barres omnibus (50, 60, 70) disposées en haut des ensembles de capuchon (14), chacune des barres omnibus (50, 60, 70) étant configurée pour connecter électriquement au moins deux éléments de batterie (10) par le biais de leurs bornes d'élément (11, 12) et la pluralité de barres omnibus (50, 60, 70) étant configurées pour conduire le courant du module de batterie (100) ;
une pluralité d'incrustations (40, 41, 42) chacune moulée de manière positive sur au moins une barre omnibus (50, 60, 70) et présentant au plus la hauteur de la au moins une barre omnibus (50, 60, 70) ; et
un couvercle supérieur (81) disposé en haut des barres omnibus (50, 70, 75) et recouvrant les ensembles de capuchon (14) des éléments de batterie (10), les bornes d'élément (11, 12), les barres omnibus (50, 60, 70), et la pluralité d'incrustations (40, 41, 42),
dans lequel la pluralité de barres omnibus (50, 60, 70) et la pluralité d'incrustations (40, 41, 42) forment une surface de support (43) continue s'étendant le long de la pluralité d'éléments de batterie (10) dans une direction d'alignement de la pluralité d'éléments de batterie (10) et tournée vers le couvercle supérieur (81) pour supporter le couvercle supérieur (81).

2. Module de batterie (100) selon la revendication 1, dans lequel la pluralité de barres omnibus (50, 60, 70) et au moins une de la pluralité d'incrustations (40, 41, 42) forment une surface de support (43) au même niveau et/ou rectiligne.

3. Module de batterie (100) selon la revendication 1 ou 2, dans lequel la hauteur de chacune de la pluralité d'incrustations (40, 41, 42) correspond à la hauteur de chacune de la pluralité de barres omnibus (50, 60, 70).

4. Module de batterie (100) selon l'une quelconque des revendications précédentes, dans lequel le couvercle supérieur (81) est un couvercle supérieur (80, 81) isolant et/ou dans lequel une couche isolante (80) est disposée entre le couvercle supérieur (81) et la pluralité de barres omnibus (50, 60, 70).

5. Module de batterie (100) selon la revendication 1, dans lequel la surface de support (43) continue s'étend également le long de la pluralité d'éléments de batterie (10) dans une direction perpendiculaire à la direction d'alignement de la pluralité d'éléments de batterie (10).

6. Module de batterie (100) selon l'une quelconque des revendications 1 à 4,
dans lequel, pour chacun de la pluralité d'éléments de batterie (10), l'évent d'échappement de gaz (99) est disposé entre une première borne d'élément (11) et une deuxième borne d'élément (12),
dans lequel un premier sous-ensemble de barres omnibus (61, 71) interconnecte électriquement les premières bornes d'élément (11) et un deuxième sous-ensemble de barres omnibus (62, 72) interconnecte électriquement les deuxièmes bornes d'élément (12), et
dans lequel un premier sous-ensemble d'incrustations (41) est moulé de manière positive sur les barres omnibus (65.1, 75.1) du premier ensemble de barres omnibus (61, 71) et un deuxième ensemble d'incrustations (42) est moulé de manière positive sur les barres omnibus (65.2, 75.2) du deuxième ensemble de barres omnibus (62, 72).

7. Module de batterie (100) selon la revendication 6, dans lequel un canal d'échappement de gaz (44) est formé dans la couche de barres omnibus (50, 60, 70) et s'étend le long des évents d'échappement de gaz (99) de la pluralité d'éléments de batterie (10).

8. Module de batterie (100) selon la revendication 7, dans lequel le canal d'échappement de gaz (44) est confiné par le premier sous-ensemble d'incrustations (41), le deuxième sous-ensemble d'incrustations (42), les ensembles de capuchon (14), et le couvercle supérieur (81).

9. Module de batterie (100) selon l'une quelconque des revendications précédentes, comprenant un premier sous-ensemble (60) de barres omnibus (65) pour interconnecter un premier sous-ensemble (15) d'éléments de batterie (10) et une deuxième sous-couche (70) de barres omnibus (75) pour interconnecter un deuxième sous-ensemble (16) d'éléments de batterie (10), la deuxième sous-couche (70) de barres omnibus (75) étant disposée au-dessus de la première sous-couche (60) de barres omnibus (65), dans lequel les barres omnibus (65) de la première sous-couche (60) sont décalées par rapport aux barres omnibus (75) de la deuxième sous-couche (70).

10. Module de batterie (100) selon l'une quelconque des revendications précédentes, dans lequel chaque barre omnibus (50) de la pluralité de barres omnibus (50) comprend une partie de corps de barre omnibus (51) s'étendant dans la direction d'alignement du module de batterie (100) et au moins deux pattes (52, 53) s'étendant à partir de la partie de corps de barre omnibus (51) dans une direction non parallèle à la direction d'alignement, les pattes (52, 53) étant configurées pour connecter électriquement la partie de corps de barre omnibus (51) et les bornes d'élément (11, 12).

11. Module de batterie (100) selon la revendication 10, dans lequel la partie de corps de barre omnibus (51) comprend une première section de corps (54) avec au moins une patte (52) s'étendant à partir de celle-ci, une deuxième section de corps (55) avec au moins une patte (53) s'étendant à partir de celle-ci, et une troisième section de corps (56) disposée entre les première (54) et deuxième (55) sections de corps, les sections de corps (54, 55, 56) étant de la même longueur dans la direction d'alignement.

12. Module de batterie (100) selon la revendication 11 dans la mesure où elle renvoie à la revendication 9, dans lequel les barres omnibus (65) de la première sous-couche (60) sont décalées par rapport aux barres omnibus (75) de la deuxième sous-couche (70) par la longueur d'une section de corps (54, 55, 56).

13. Module de batterie (100) selon la revendication 11 ou 12, dans lequel les sections de corps (54, 55, 56) s'étendent dans la direction d'alignement avec une extension spatiale qui correspond à l'extension spatiale d'éléments de batterie (10) connectés parallèlement du module de batterie (100).

14. Module de batterie (100) selon la revendication 9, dans lequel la première sous-couche (60) de barres omnibus (65) est séparée de la deuxième sous-couche (70) de barres omnibus (75) par le biais d'au moins une couche électriquement isolante (80).

15. Module de batterie (100) selon l'une quelconque des revendications 10 à 14 dans la mesure où elles renvoient à la revendication 9,
dans lequel une barre omnibus (65) de la première sous-couche (60) comprend une partie de corps de barre omnibus plane (63) avec au plus la hauteur d'une borne d'élément (11, 12) et une patte (64) avec une partie de contact de borne d'élément (66) qui est espacée de la partie de corps de barre omnibus (63) dans une direction de hauteur de celle-ci et avec une partie de pontage (68) qui connecte la partie de corps de barre omnibus (63) et la partie de contact de borne d'élément (66),
dans lequel une barre omnibus (75) de la deuxième sous-couche de barres omnibus (70) est de forme plane avec au plus la hauteur d'une borne d'élément (11, 12).
